(19) Europäisches Patentamt / European Patent Office / Office européen des brevets

(11) **EP 4 723 235 A1**

(12) **EUROPEAN PATENT APPLICATION**
published in accordance with Art. 153(4) EPC

(43) Date of publication:
**08.04.2026  Bulletin 2026/15**

(21) Application number: **24937488.5**

(22) Date of filing: **29.05.2024**

(51) International Patent Classification (IPC):
*H01M 4/525* (2010.01)   *H01M 4/505* (2010.01)
*H01M 4/485* (2010.01)   *H01M 4/36* (2006.01)
*H01M 4/131* (2010.01)   *H01M 10/0525* (2010.01)

(52) Cooperative Patent Classification (CPC):
Y02E 60/10

(86) International application number:
**PCT/CN2024/096120**

(87) International publication number:
**WO 2025/227449 (06.11.2025 Gazette 2025/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.04.2024  CN 202410545373**

(71) Applicant: **Beijing Easpring Material Technology Co., Ltd.**
**Beijing 100160 (CN)**

(72) Inventors:
• **LIU, Yun**
  **Beijing 100160 (CN)**

• **WANG, Cong**
  **Beijing 100160 (CN)**
• **WANG, Jingpeng**
  **Beijing 100160 (CN)**
• **ZHOU, Penghu**
  **Beijing 100160 (CN)**
• **ZHANG, Xuequan**
  **Beijing 100160 (CN)**
• **LIU, Yafei**
  **Beijing 100160 (CN)**
• **CHEN, Yanbin**
  **Beijing 100160 (CN)**

(74) Representative: **Ricker, Mathias**
  **Wallinger Ricker Schlotter Tostmann**
  **Patent- und Rechtsanwälte Partnerschaft mbB**
  **Zweibrückenstraße 5-7**
  **80331 München (DE)**

(54) **POSITIVE ELECTRODE ACTIVE MATERIAL AND PREPARATION METHOD THEREFOR, POSITIVE ELECTRODE SHEET, BATTERY, AND ELECTRIC DEVICE**

(57)   A positive electrode active material and a preparation method therefor, a positive electrode sheet, a battery, and an electric device. The positive electrode active material comprises a plurality of primary particles. The equivalent number $N_{(003)}$ of layers of (003) crystal planes and the equivalent number $N_{(104)}$ of layers of (104) crystal planes of the positive electrode active material satisfy that: $N_{(003)}*N_{(104)}$ is $1*10^4$-$3*10^4$, and formula (I), wherein $D_{(003)}$ is the average thickness, in nm, of crystallites in the positive electrode active material in a direction perpendicular to the (003) crystal planes; $d_{(003)}$ is the interplanar spacing, in nm, of the (003) crystal planes in the crystallites of the positive electrode active material; $D_{(104)}$ is the average thickness, in nm, of the crystallites in the positive electrode active material in a direction perpendicular to the (104) crystal planes; and $d_{(104)}$ is the interplanar spacing, in nm, of the (104) crystal planes in the crystallites of the positive electrode active material.

$$N_{(003)} = \frac{D_{(003)}}{d_{(003)}}, \quad N_{(104)} = \frac{D_{(104)}}{d_{(104)}}$$

EP 4 723 235 A1

**Description**

**PRIORITY INFORMATION**

This application claims priority to the Chinese patent application No. 202410545373.0, filed with the China National Intellectual Property Administration on April 30, 2024, and entitled "CATHODE ACTIVE MATERIAL AND PREPARATION METHOD THEREOF, CATHODE PLATE, BATTERY, AND ELECTRICAL DEVICE", which is incorporated herein by reference in its entirety.

**FIELD**

The present disclosure belongs to the field of batteries, and specifically relates to a cathode active material and a preparation method thereof, a cathode plate, a battery, and an electrical device.

**BACKGROUND**

With the continuous upgrading of market demand for electric vehicles, higher requirements are placed on the energy density, rate capability, and life of batteries. The cathode materials of the battery have always been one of the main research hotspots in the field of power batteries because they have the greatest impact on cost and performance in the power battery system. The layered lithium nickel cobalt manganese oxide ternary cathode material has high gram capacity and is the mainstream choice in the current cathode material market of the power battery. However, how to make the batteries loaded with the layered ternary cathode materials achieve high energy density, cycle life, and safety performance is still a problem of great concern in the research field and application market.

**SUMMARY**

The present disclosure aims to solve, at least to a certain extent, one of the technical problems in the related art. To this end, one purpose of the present disclosure is to provide a cathode active material and a preparation method thereof, a cathode plate, a battery, and an electrical device. The use of the cathode active material can enable the battery loaded with it to have high energy density, cycling performance, rate capability, and safety performance.

In one aspect of the present disclosure, the present disclosure provides a cathode active material. According to an embodiment of the present disclosure, the cathode active material includes a plurality of primary particles. An equivalent number $N_{(003)}$ of (003) crystallographic planes and an equivalent number $N_{(104)}$ of (104) crystallographic planes of the cathode active material satisfy: $N_{(003)} * N_{(104)}$ ranges from $1*10^4$ to $3*10^4$;

$$N_{(003)} = \frac{D_{(003)}}{d_{(003)}}\text{; and}$$

$$N_{(104)} = \frac{D_{(104)}}{d_{(104)}}\text{,}$$ where: $D_{(003)}$ is an average thickness of crystallites in the cathode active material perpendicular to the (003) crystallographic plane, in the unit of nm; $d_{(003)}$ is an interplanar spacing of the (003) crystallographic planes in the crystallites of the cathode active material, in the unit of nm; $D_{(104)}$ is an average thickness of the crystallites in the cathode active material perpendicular to the (104) crystallographic plane, in the unit of nm; and $d_{(104)}$ is an interplanar spacing of the (104) crystallographic planes in the crystallites of the cathode active material, in the unit of nm.

According to the cathode active material of the embodiment of the present disclosure, the equivalent number $N_{(003)}$ of the (003) crystallographic planes and the equivalent number $N_{(104)}$ of the (104) crystallographic planes of the cathode active material satisfy: $N_{(003)} * N_{(104)}$ ranges from $1*10^4$ to $3*10^4$. In this way, the cathode active material can have ultra-high capacity and rate capability, and during the long cycle process, the cathode active material crystallite body can have sufficient expansion and contraction elasticity, thereby improving the particle strength and charge and discharge cycle life of the material. Therefore, the use of the cathode active material of the present disclosure can enable the battery loaded with the cathode active material to have high energy density, cycling performance, rate capability and safety performance.

In addition, the cathode active material according to the above embodiment of the present disclosure may also have the following additional technical features.

In some embodiments of the present disclosure, $N_{(003)} * N_{(104)}$ ranges from $1.5*10^4$ to $2.5*10^4$. As a result, the energy density, cycling performance, rate capability, and safety performance of the battery can be further improved.

In some embodiments of the present disclosure, the equivalent number $N_{(003)}$ of the (003) crystallographic planes of the cathode active material ranges from 80 to 140.

In some embodiments of the present disclosure, the equivalent number $N_{(003)}$ of the (003) crystallographic planes of the cathode active material ranges from 90 to 130.

In some embodiments of the present disclosure, the equivalent number $N_{(104)}$ of the (104) crystallographic planes of the cathode active material ranges from 130 to 200.

In some embodiments of the present disclosure, the equivalent number $N_{(104)}$ of the (104) crystallographic planes of the cathode active material ranges from 140 to 190.

In some embodiments of the present disclosure, $D_{(003)} = \frac{K\lambda}{\beta 1 cos\theta 1}$ , where: K is the Scherrer constant of 0.89, $\lambda$ is the test X-ray wavelength, $\beta 1$ is the full width at half maximum of the diffraction peak of the (003) crystallographic plane in the crystallites of the cathode active material, and $\theta 1$ is the Bragg diffraction angle of the (003) crystallographic plane in the crystallites of the cathode active material.

In some embodiments of the present disclosure, $d_{(003)} = \frac{\lambda}{2 Sin\theta 1}$ .

In some embodiments of the present disclosure, the average thickness $D_{(003)}$ of the crystallites in the cathode active material perpendicular to the (003) crystallographic plane ranges from 40 nm to 60 nm.

In some embodiments of the present disclosure, the average thickness $D_{(003)}$ of the crystallites in the cathode active material perpendicular to the (003) crystallographic plane ranges from 45 nm to 55 nm.

In some embodiments of the present disclosure, the interplanar spacing $d_{(003)}$ of the (003) crystallographic planes in the crystallites of the cathode active material ranges from 0.4730 nm to 0.4760 nm.

In some embodiments of the present disclosure, the interplanar spacing $d_{(003)}$ of the (003) crystallographic planes in the crystallites of the cathode active material ranges from 0.4732 nm to 0.4750 nm.

In some embodiments of the present disclosure, $D_{(104)} = \frac{K\lambda}{\beta 2 cos\theta 2}$ , where: K is the Scherrer constant of 0.89, $\lambda$ is the test X-ray wavelength, $\beta 2$ is the full width at half maximum of the diffraction peak of the (104) crystallographic plane in the crystallites of the cathode active material, and $\theta 2$ is the Bragg diffraction angle of the (104) crystallographic plane in the crystallites of the cathode active material.

In some embodiments of the present disclosure, $d_{(104)} = \frac{\lambda}{2 Sin\theta 2}$ .

In some embodiments of the present disclosure, the average thickness $D_{(104)}$ of the crystallites in the cathode active material perpendicular to the (104) crystallographic plane ranges from 20 nm to 50 nm.

In some embodiments of the present disclosure, the average thickness $D_{(104)}$ of the crystallites in the cathode active material perpendicular to the (104) crystallographic plane ranges from 30 nm to 40 nm.

In some embodiments of the present disclosure, the interplanar spacing $d_{(104)}$ of the (104) crystallographic planes in the crystallites of the cathode active material ranges from 0.2035 nm to 0.2045 nm.

In some embodiments of the present disclosure, the interplanar spacing $d_{(104)}$ of the (104) crystallographic planes in the crystallites of the cathode active material ranges from 0.2037 nm to 0.2042 nm.

In some embodiments of the present disclosure, the cathode active material includes a matrix, and the matrix includes $Li_{1+a}Ni_xCo_yMn_zM_mO_2$, where: $-0.05 \le a \le 0.3$, $0.8 \le x \le 1$, $0 \le y \le 0.2$, $0 \le z \le 0.2$, and $0.002 \le m \le 0.01$; and M includes at least one of Sb, Nb, Mg, La, Ti, Al, Sr, Ba, Y, Zr, Ca, Fe, S, Zn, or Ta. As a result, the energy density, cycling performance, rate capability, and safety performance of the battery can be further improved.

In some embodiments of the present disclosure, the cathode active material further includes a coating layer formed on at least a portion of a surface of the matrix. The coating layer contains element J, and the element J includes at least one of F, B, Cl, Br, I, S, Al, W, Co, Sn, or Mo. As a result, the energy density, cycling performance, rate capability, and safety performance of the battery can be further improved.

In a second aspect of the present disclosure, the present disclosure provides a method for preparing the above-mentioned cathode active material. The method includes: preparing a cathode active material precursor; and performing first mixing sintering on the cathode active material precursor with a lithium source and a dopant containing element M, to obtain a first sintered material of the cathode active material.

As a result, the above-mentioned cathode active material can be prepared by using this method, which allows the battery loaded with the cathode active material to have high energy density, cycling performance, rate capability, and safety performance.

In some embodiments of the present disclosure, the cathode active material precursor is prepared by the following method: adjusting pH of a mixed system including a nickel salt, a cobalt salt, a manganese salt, a precipitant, and a complexing agent to $pH_1$ to obtain precursor crystal nuclei, wherein the $pH_1$ ranges from 9 to 12, and the precursor crystal nuclei have a Dv50 ranging from 2 $\mu$m to 4 $\mu$m; and adjusting the pH of the mixed system to $pH_2$ to obtain the cathode active material precursor, wherein the $pH_2$ ranges from 9 to 13, and the $pH_2$ is greater than the $pH_1$.

In some embodiments of the present disclosure, a difference between the $pH_2$ and the $pH_1$ ranges from 0.1 to 1.

In some embodiments of the present disclosure, the cathode active material precursor satisfies at least one of the following conditions: the cathode active material precursor has a Dv50 ranging from 9 $\mu$m to 20 $\mu$m; the equivalent number $N_{(101)}$ of (101) crystallographic planes of the cathode active material precursor ranges from 60 to 120; the equivalent number $N_{(001)}$ of (001) crystallographic planes of the cathode active material precursor ranges from 20 to 60; or the equivalent number $N_{(100)}$ of (100) crystallographic planes of the cathode active material precursor ranges from 110 to 140.

As a result, the capacity and rate capability of the cathode active material can be improved.

In some embodiments of the present disclosure, the cathode active material precursor satisfies at least one of the following conditions: the equivalent number $N_{(101)}$ of (101) crystallographic planes of the cathode active material precursor ranges from 60 to 90; the equivalent number $N_{(001)}$ of (001) crystallographic planes of the cathode active material precursor ranges from 20 to 50; or the equivalent number $N_{(100)}$ of (100) crystallographic planes of the cathode active material precursor ranges from 110 to 130.

As a result, the capacity and rate capability of the cathode active material can be improved.

In some embodiments of the present disclosure, a temperature of the first mixing sintering ranges from 650°C to 900°C, and a duration of the first mixing sintering ranges from 4 hours to 15 hours.

In some embodiments of the present disclosure, the method further includes performing second mixing sintering on the first sintered material of the cathode active material with a coating agent containing the element J, to form the coating layer containing the element J on at least a portion of a surface of the first sintered material of the cathode active material. As a result, the cycle stability of the cathode active material can be improved.

In some embodiments of the present disclosure, a temperature of the second mixing sintering ranges from 200°C to 700°C, and a duration of the second mixing sintering ranges from 3 hours to 10 hours.

In a third aspect of the present disclosure, the present disclosure provides a cathode plate. The cathode plate includes the cathode active material according to the first aspect of the present disclosure or the cathode active material obtained by the method according to the second aspect of the present disclosure. As a result, the battery loaded with the cathode active material can have high energy density, cycling performance, rate capability, and safety performance.

In a fourth aspect of the present disclosure, the present disclosure provides a battery. The battery includes the cathode plate according to the third aspect of the present disclosure. As a result, the battery can have high energy density, cycling performance, rate capability, and safety performance.

In a fifth aspect of the present disclosure, the present disclosure provides an electrical device, which includes the battery according to the fourth aspect of the present disclosure.

Additional aspects and advantages of the present disclosure will be provided in part in the following description, or will become apparent in part from the following description, or can be learned from practicing of the present disclosure.

## DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

The endpoints of the ranges and any values disclosed herein shall not limited to the exact range or value, and those ranges or values should be understood to include values close to those ranges or values. For numerical ranges, endpoints of the respective ranges, an endpoint of respective ranges and an individual point value, and individual point values may be combined with each other to obtain one or more new numerical ranges, which should be deemed to be specifically disclosed herein.

In one aspect of the present disclosure, the present disclosure provides a cathode active material. According to an embodiment of the present disclosure, the cathode active material includes a plurality of primary particles. An equivalent number $N_{(003)}$ of (003) crystallographic planes and an equivalent number $N_{(104)}$ of (104) crystallographic planes of the cathode active material satisfy: $N_{(003)}*N_{(104)}$ ranges from $1*10^4$ to $3*10^4$; $N_{(003)} = \dfrac{D_{(003)}}{d_{(003)}}$; and

$N_{(104)} = \dfrac{D_{(104)}}{d_{(104)}}$, where: $D_{(003)}$ is an average thickness of crystallites in the cathode active material perpendicular to the (003) crystallographic plane, in the unit of nm; $d_{(003)}$ is an interplanar spacing of the (003) crystallographic planes in the crystallites of the cathode active material, in the unit of nm; $D_{(104)}$ is an average thickness of the crystallites in the cathode active material perpendicular to the (104) crystallographic plane, in the unit of nm; and $d_{(104)}$ is an interplanar spacing of the (104) crystallographic planes in the crystallites of the cathode active material, in the unit of nm.

The inventors found that the equivalent number of the crystallographic planes of the cathode active material with a layered structure represents the framework size of the R-3m structure. For the cathode active material with a layered structure, the statistical number of stacked layers in a certain direction can reflect the average number of lattice sites in that direction. For the cathode active material with a layered structure, the equivalent number of the crystallographic planes in each direction can truly reflect the number of active lithium sites that a single microcrystal can accommodate, which will affect the capacity, lithium ion transmission channels, and overall structural stability. The product $N_{(003)}*N_{(104}$ of the equivalent number $N_{(003)}$ of the (003) crystallographic planes and the equivalent number $N_{(104)}$ of the (104) crystallographic planes of the cathode active material reflects the product of the equivalent number of the crystallographic planes in the c-axis direction and the equivalent number of the crystallographic planes in the a-axis direction of the unit cell, represents the degree of stacking of the layered framework of the entire crystallites, and determines the number of lithium sites that can be accommodated in the entire cathode active material from the structure-activity relationship, which not only affects the total capacity of the material, but also determines the stability of the crystal. The inventors further found that the equivalent number $N_{(003)}$ of the (003) crystallographic planes and the equivalent number $N_{(104)}$ of the (104) crystallographic planes of the cathode active material satisfy: $N_{(003)}*N_{(104)}$ ranges from $1*10^4$ to $3*10^4$. In this way, the cathode active material can have ultra-high capacity and rate capability, and during the long cycle process, the cathode active material crystallite body can have sufficient expansion and contraction elasticity, thereby improving the particle strength and charge and discharge cycle life of the material. Therefore, the use of the cathode active material of the present disclosure can enable the battery loaded with the cathode active material to have high energy density, cycling performance, rate capability, and safety performance.

According to an embodiment of the present disclosure, the equivalent number $N_{(003)}$ of the (003) crystallographic planes and the equivalent number $N_{(104)}$ of the (104) crystallographic planes of the above-mentioned cathode active material satisfy: $N_{(003)}*N_{(104)}$ ranges from $1*10^4$ to $3*10^4$, for example, $1*10^4$, $1.5*10^4$, $2*10^4$, $2.5*10^4$, $3*10^4$, etc. According to a specific embodiment of the present disclosure, $N_{(003)}*N_{(104)}$ ranges from $1.5*10^4$ to $2.5*10^4$. As a result, the energy density, cycling performance, rate capability, and safety performance of the battery can be further improved.

According to an embodiment of the present disclosure, the equivalent number $N_{(003)}$ of the (003) crystallographic planes of the cathode active material ranges from 80 to 140, for example, 80, 90, 100, 110, 120, 130, 140, etc. Further, the equivalent number $N_{(003)}$ of the (003) crystallographic planes of the cathode active material ranges from 90 to 130. The equivalent number $N_{(104)}$ of the (104) crystallographic planes of the cathode active material ranges from 130 to 200, for example, 130, 140, 150, 160, 170, 180, 190, 200, etc. Further, the equivalent number $N_{(104)}$ of the (104) crystallographic planes of the cathode active material ranges from 140 to 190.

The inventors found that when the equivalent number of the (003) crystallographic planes of the cathode active material is within the above range, on the one hand, it is ensured that the overall layered framework can have enough lithium sites, providing space for active lithium to accommodate and obtain the maximum reversible capacity; and on the other hand, the expansion and contraction of the c-axis during the charge and discharge can be stabilized, which can alleviate the distortion and collapse of the material structure and give the material excellent cycle stability. The equivalent number of the (104) crystallographic planes of the cathode active material can indirectly reflect the number of stacking layers in the a-axis direction, represent the size of the flat layer, and determine the number of sites that can accommodate lithium ions in each flat layer and the length of the solid phase migration path when lithium ions intercalate and deintercalate in the layer. When the equivalent number of the (104) crystallographic planes of the cathode active material is within the above range, the material can be given a maximum reversible capacity and high rate capability. Therefore, the present disclosure can further improve the energy density, cycling performance, rate capability, and safety performance of the battery by controlling $N_{(003)}$ and $N_{(104)}$ of the cathode active material within the above ranges.

Specifically, by performing Scherrer formula and Bragg formula calculation on the XRD test results of the cathode active material, the average crystallite thickness $D_{hkl}$ of the material along a certain crystallographic plane and the interplanar spacing $d_{hkl}$ of the material along certain crystallographic planes can be obtained, and the equivalent number of the crystallographic planes in the crystallites of the material along a specific crystallographic plane can be calculated using

$N_{hkl}=D_{hkl}/d_{hk}$, for example $N_{(003)} = \dfrac{D_{(003)}}{d_{(003)}}$ and $N_{(104)} = \dfrac{D_{(104)}}{d_{(104)}}$.

As an example, $D_{(003)} = \dfrac{K\lambda}{\beta 1 cos\theta 1}$, where: K is the Scherrer constant of 0.89, $\lambda$ is the test X-ray wavelength, $\beta 1$ is the full width at half maximum of the diffraction peak of the (003) crystallographic plane in the crystallites of the cathode active material, and $\theta 1$ is the Bragg diffraction angle of the (003) crystallographic plane in the crystallites of the cathode active material; $d_{(003)} = \frac{\lambda}{2\sin\theta 1}$; $D_{(104)} = \frac{K\lambda}{\beta 2 \cos\theta 2}$, where: K is the Scherrer constant of 0.89, $\lambda$ is the test X-ray wavelength, $\beta 2$ is the full width at half maximum of the diffraction peak of the (104) crystallographic plane in the crystallites of the cathode active material, and $\theta 2$ is the Bragg diffraction angle of the (104) crystallographic plane in the crystallites of the cathode active material; and $d_{(104)} = \frac{\lambda}{2\sin\theta 2}$. Specifically, the $2\theta 1$ of the XRD diffraction characteristic peak corresponding to the (003) crystallographic plane ranges from 18.5° to 19.5°, and the $2\theta 2$ of the (104) crystallographic plane ranges from 44.0° to 44.5°.

According to an embodiment of the present disclosure, the average thickness $D_{(003)}$ of the crystallites in the cathode active material perpendicular to the (003) crystallographic plane ranges from 40 nm to 60 nm, for example, 40nm, 45nm, 50nm, 55nm, 60nm, etc. Further, the average thickness $D_{(003)}$ of the crystallites in the cathode active material perpendicular to the (003) crystallographic plane ranges from 45 nm to 55 nm. Therefore, by controlling the average thickness $D_{(003)}$ of the crystallites in the cathode active material perpendicular to the (003) crystallographic plane to satisfy the above range, the material can have a suitable crystallite size in the c-axis direction, which can not only ensure the normal reversible capacity release, but also have a certain stabilizing effect when the c-axis expands and contracts, giving the material excellent comprehensive performance in capacity and cycle.

According to an embodiment of the present disclosure, the interplanar spacing $d_{(003)}$ of the (003) crystallographic planes in the crystallites of the cathode active material ranges from 0.4730 nm to 0.4760 nm, for example, 0.4730nm, 0.4735nm, 0.4740nm, 0.4745nm, 0.4750nm, 0.4755nm, 0.4760nm, etc. Further, the interplanar spacing $d_{(003)}$ of the (003) crystallographic planes in the crystallites of the cathode active material ranges from 0.4732 nm to 0.4750 nm. Therefore, by controlling the interplanar spacing $d_{(003)}$ of the (003) crystallographic planes in the crystallites of the cathode active material to satisfy the above range, on the one hand, it is conducive to the rapid intercalation and deintercalation of lithium ions and the improvement of the rate capability of the material; and on the other hand, the contraction and expansion of the unit cell in the c-axis direction can have a certain space, the lattice distortion and micro-stress of the crystallites can be reduced, and the stability of the material can be improved.

According to an embodiment of the present disclosure, the average thickness $D_{(104)}$ of the crystallites in the cathode active material perpendicular to the (104) crystallographic plane ranges from 20 nm to 50 nm, for example, 20nm, 25nm, 30nm, 35nm, 40nm, 45nm, 50nm, etc. Further, the average thickness $D_{(104)}$ of the crystallites in the cathode active material perpendicular to the (104) crystallographic plane ranges from 30 nm to 40 nm. Therefore, by controlling the average thickness $D_{(104)}$ of the crystallites in the cathode active material perpendicular to the (104) crystallographic plane to satisfy the above range, the material can have a suitable crystallite size in the a-axis direction, and the material can have an active structure and lithium ion migration channel with suitable size, ensuring that the material has high capacity and good rate capability.

According to an embodiment of the present disclosure, the interplanar spacing $d_{(104)}$ of the (104) crystallographic planes in the crystallites of the cathode active material ranges from 0.2035 nm to 0.2045 nm, for example, 0.2035nm, 0.2037nm, 0.2039nm, 0.2040nm, 0.2042nm, 0.2044nm, 0.2045nm, etc. Further, the interplanar spacing $d_{(104)}$ of the (104) crystallographic planes in the crystallites of the cathode active material ranges from 0.2037 nm to 0.2042 nm. Therefore, by controlling the interplanar spacing $d_{(104)}$ of the (104) crystallographic planes in the crystallites of the cathode active material to satisfy the above range, it is beneficial to the rapid intercalation and deintercalation of lithium ions, and can also alleviate the unit cell contraction in the a-axis direction, thereby improving the rate capability and cycle stability of the material.

According to an embodiment of the present disclosure, the cathode active material includes a matrix, and the matrix includes $Li_{1+a}Ni_xCo_yMn_zM_nO_2$, where: $-0.05 \leq a \leq 0.3$, $0.8 \leq x \leq 1$, $0 \leq y \leq 0.2$, $0 \leq z \leq 0.2$, and $0.002 \leq m \leq 0.01$; and M includes at least one of Sb, Nb, Mg, La, Ti, Al, Sr, Ba, Y, Zr, Ca, Fe, S, Zn, or Ta. As a result, the energy density, cycling performance, rate capability, and safety performance of the battery can be further improved.

According to some embodiments of the present disclosure, in the $Li_{1+a}Ni_xCo_yMn_zM_mO_2$, a satisfies $-0.05 \leq a \leq 0.3$, for example, a is -0.05, -0.02, 0, 0.02, 0.05, 0.1, 0.2, 0.3, etc. Therefore, the inclusion of this content of lithium ions in the matrix can increase the specific capacity of the cathode active material, thereby making the battery have a higher energy density.

According to some embodiments of the present disclosure, in the $Li_{1+a}Ni_xCo_yMn_zM_mO_2$, x, y, z, and m satisfy $0.8 \leq x \leq 1$, $0 \leq y \leq 0.2$, $0 \leq z \leq 0.2$, and $0.002 \leq m \leq 0.01$. For example, x is 0.8, 0.85, 0.9, 0.95, 1, etc.; y is 0, 0.1, 0.15, 0.2, etc.; z is 0, 0.1, 0.15, 0.2, etc.; m is 0.002, 0.005, 0.007, 0.01, etc.

According to an embodiment of the present disclosure, the cathode active material further includes a coating layer formed on at least a portion of a surface of the matrix. The coating layer contains element J, and the element J includes at least one of F, B, Cl, Br, I, S, Al, W, Co, Sn, or Mo. As a result, by forming a coating layer including element J on the matrix, the energy density, cycling performance, rate capability, and safety performance of the battery can be further improved.

It should be noted that the element J in the coating layer may exist in the form of oxide and/or lithium oxide, and those skilled in the art may select the form according to actual needs, which will not be described in detail here.

In a second aspect of the present disclosure, the present disclosure provides a method for preparing the above-mentioned cathode active material. According to an embodiment of the present disclosure, the method includes the following steps.

S100: preparing a cathode active material precursor

According to an embodiment of the present disclosure, the cathode active material precursor may be a commercially available product or may be prepared by the following steps.

Sa: adjusting pH of a mixed system including a nickel salt, a cobalt salt, a manganese salt, a precipitant, and a complexing agent to $pH_1$ to obtain precursor crystal nuclei, the $pH_1$ ranging from 9 to 12. Specifically, a nickel salt solution, a cobalt salt solution, and a manganese salt solution are mixed according to a molar ratio of element nickel, element cobalt, and element manganese of x: y: z to obtain a mixed salt solution, and then nitrogen is introduced into the reactor. At the same time, the mixed salt solution, a precipitant (e.g., sodium hydroxide solution), and a complexing agent (e.g., ammonia water) are added into the reactor, and the pH of the mixed system is adjusted to $pH_1$, the $pH_1$ ranging from 9 to 12. The mixed system fully reacts and co-precipitates to form the precursor crystal nuclei.

Sb: when the precursor crystal nuclei have a Dv50 ranging from 2 $\mu$m to 4 $\mu$m, adjusting the pH of the mixed system to $pH_2$, the $pH_2$ ranging from 9 to 13. The mixed salt solution, the precipitant, and the complexing agent are continuously added, which allows nickel ions, cobalt ions, and manganese ions in the mixed salt solution to continue to undergo co-precipitation reaction with the precursor crystal nuclei as the seed, to obtain the cathode active material precursor. The $pH_2$ is greater than the $pH_1$. As an example, a difference between the $pH_2$ and the $pH_1$ ranges from 0.1 to 1.

The method for preparing the cathode active material precursor in the present disclosure is simple and feasible. By controlling the pH value, a precursor with a specific equivalent number of a crystallographic planes can be synthesized, thereby affecting the crystallite structure in the primary particles of the cathode active material.

According to an embodiment of the present disclosure, the cathode active material precursor has a Dv50 ranging from 9 $\mu$m to 20 $\mu$m, for example, 9 $\mu$m, 10 $\mu$m, 12 $\mu$m, 15 $\mu$m, 18 $\mu$m, 20 $\mu$m, etc.

In the present disclosure, Dv50 refers to the particle size corresponding to when the cumulative volume distribution percentage reaches 50%, and is measured using a laser particle size analyzer (such as Malvern Master Size 3000) with reference to standard GB/T 19077-2016.

According to an embodiment of the present disclosure, the equivalent number $N_{(101)}$ of (101) crystallographic planes of the cathode active material precursor ranges from 60 to 120, for example, 60, 70, 80, 90, 100, 110, 120, etc. Further, the equivalent number $N_{(101)}$ of (101) crystallographic planes of the cathode active material precursor ranges from 60 to 90. The equivalent number $N_{(001)}$ of (001) crystallographic planes of the cathode active material precursor ranges from 20 to 60, for example, 20, 30, 40, 50, 60, etc. Further, the equivalent number $N_{(001)}$ of (001) crystallographic planes of the cathode active material precursor ranges from 20 to 50. The equivalent number $N_{(100)}$ of (100) crystallographic planes of the cathode active material precursor ranges from 110 to 140, for example, 110, 120, 130, 140, etc. Further, the equivalent number $N_{(100)}$ of (100) crystallographic planes of the cathode active material precursor ranges from 110 to 130.

Therefore, when the equivalent number $N_{(101)}$ of the (101) crystallographic planes, the equivalent number $N_{(001)}$ of the (001) crystallographic planes, and the equivalent number $N_{(100)}$ of the (100) crystallographic planes of the cathode active material precursor satisfy the above ranges, the precursor can have a wide pyrometallurgical temperature tolerance range. When the sintering temperature is increased, the cathode active material can be fully lithiated to obtain higher crystallinity and fewer crystal defects, and the precursor can withstand high temperatures, making the cathode crystals do not continue to grow to result in an excessive equivalent number. As a result, for the precursor satisfying the above-mentioned equivalent number of the crystallographic planes, the pyrometallurgical process can be simplified, thereby improving the capacity and rate capability of the prepared cathode active material.

It should be noted that the tests of the equivalent number $N_{(101)}$ of the (101) crystallographic planes, the equivalent number $N_{(001)}$ of the (001) crystallographic planes, and the equivalent number $N_{(100)}$ of the (100) crystallographic planes of the cathode active material precursor are similar to the tests of $N_{(003)}$ and $N_{(104)}$ of the above-mentioned cathode active materials. For example, $N_{(101)} = \dfrac{D_{(101)}}{d_{(101)}}$, $N_{(001)} = \dfrac{D_{(001)}}{d_{(001)}}$, and

$N_{(100)} = \dfrac{D_{(100)}}{d_{(100)}}$, where: $D_{(101)}$ is an average thickness of crystallites in the cathode active material perpendicular to the (101) crystallographic plane, in the unit of nm; $d_{(101)}$ is an interplanar spacing of the (101) crystallographic planes in the crystallites of the cathode active material, in the unit of nm; $D_{(001)}$ is an average thickness of crystallites in the cathode active material perpendicular to the (001) crystallographic plane, in the unit of nm; $d_{(001)}$ is an interplanar spacing of the (001) crystallographic planes in the crystallites of the cathode active material, in the unit of nm; $D_{(100)}$ is an average thickness of crystallites in the cathode active material perpendicular to the (100) crystallographic plane, in the unit of nm; and $d_{(100)}$ is an interplanar spacing of the (100) crystallographic planes in the crystallites of the cathode active material, in the unit of nm.

As an example, $D_{(101)} = \dfrac{K\lambda}{\beta 3 \cos\theta 3}$, where: K is the Scherrer constant of 0.89, $\lambda$ is the test X-ray wavelength, $\beta 3$ is the full width at half maximum of the diffraction peak of the (101) crystallographic plane in the crystallites of the cathode active material precursor, and 03 is the Bragg diffraction angle of the (101) crystallographic plane in the crystallites of the cathode active material precursor; $d_{(101)} = \dfrac{\lambda}{2\sin\theta 3}$; $D_{(001)} = \dfrac{K\lambda}{\beta 4 \cos\theta 4}$, where: K is the Scherrer constant of 0.89, $\lambda$ is the test X-ray wavelength, $\beta 4$ is the full width at half maximum of the diffraction peak of the (001) crystallographic plane in the crystallites of the cathode active material, and 04 is the Bragg diffraction angle of the (104) crystallographic plane in the crystallites of the cathode active material; $d_{(001)} = \dfrac{\lambda}{2\sin\theta 4}$; $D_{(100)} = \dfrac{K\lambda}{\beta 5 \cos\theta 5}$, where: K is the Scherrer constant of 0.89, $\lambda$ is the test X-ray wavelength, $\beta 5$ is the full width at half maximum of the diffraction peak of the (100) crystallographic plane in the crystallites of the cathode active material precursor, and 05 is the Bragg diffraction angle of the (100) crystallographic plane in the crystallites of the cathode active material precursor; and $d_{(100)} = \dfrac{\lambda}{2\sin\theta 5}$.

S200: performing first mixing sintering on the cathode active material precursor with a lithium source and a dopant containing element M

According to an embodiment of the present disclosure, the cathode active material precursor obtained in the above step is subjected to first mixing sintering with a lithium source and a dopant containing element M in an oxygen-containing atmosphere. A temperature of the first mixing sintering ranges from 650°C to 900°C, for example, the sintering temperature is 650°C, 680°C, 700°C, 720°C, 750°C, 780°C, 800°C, 820°C, 850°C, 880°C, or 900°C; and a duration ranges from 4 hours to 15 hours, for example, 4h, 6h, 8h, 10h, 12h, 15h, etc. Then the sintered compound is naturally cooled to room temperature, and after crushing, screening, and iron removal, a cathode active material sintered material is obtained. Therefore, by selecting a specific doping element M, it is possible to regulate the growth of the crystallites of the cathode active material during the lithiation stage, and in combination with the above-mentioned sintering conditions, it is possible to control the equivalent number and the interplanar spacing of the crystallographic planes of the cathode active material.

As an example, the above-mentioned nickel salt, cobalt salt, and manganese salt may include the chlorides, carbonates, and sulfates corresponding to the respective elements, and the lithium source and the dopant containing element M may include at least one of the corresponding chlorides, carbonates, sulfates, or oxides.

Therefore, the above-mentioned cathode active material can be prepared by using this method, allowing the battery loaded with the cathode active material to have high energy density, cycling performance, rate capability, and safety performance.

According to an embodiment of the present disclosure, the method for preparing a cathode active material further includes the following step.

S300: performing second mixing sintering on the first sintered material of the cathode active material obtained in the step S200 with a coating agent containing the element J. A temperature of the second mixing sintering ranges from 200°C to 700°C, for example, 200°C, 300°C, 400°C, 500°C, 600°C, 700°C, etc.; and the duration ranges from 3 hours to 10 hours, for example, 3h, 4h, 5h, 6h, 7h, 8h, 9h, 10h, etc. In this way, the coating layer containing the element J is formed on at least a portion of a surface of the first sintered material of the cathode active material. Then, the cathode active material is obtained after natural cooling, crushing, sieving, and iron removal. Thus, by forming the coating layer containing the element J on the outer surface of the cathode active material, the side reaction between the core of the cathode active material and the electrolyte can be reduced, thereby improving the cycle stability of the cathode active material.

It should be noted that the features and advantages described above for the cathode active material are also applicable to the method for preparing the cathode active material, and will not be described in detail here.

In a third aspect of the present disclosure, the present disclosure provides a cathode plate. According to an embodiment of the present disclosure, the cathode plate includes the cathode active material according to the first aspect of the present disclosure or the cathode active material obtained by the method according to the second aspect of the present disclosure.

According to an embodiment of the present disclosure, the cathode plate includes a cathode current collector and a cathode active material layer arranged on the cathode current collector. The cathode active material layer includes the above-mentioned cathode active material. The cathode current collector can be a metal foil or a composite current collector (the composite current collector may be formed by arranging a metal material on a polymer substrate). For example, the cathode current collector can be an aluminum foil.

According to some embodiments of the present disclosure, the cathode active material layer may optionally further include a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, or a fluorine-containing acrylate resin.

According to some embodiments of the present disclosure, the cathode active material layer may further optionally include a conductive agent. As an example, the conductive agent may include at least one of superconducting carbon, acetylene black, carbon black, Ketjen black, carbon dots, carbon nanotubes, graphene, or carbon nanofibers.

According to some embodiments of the present disclosure, the cathode plate can be prepared in the following manner. The components for preparing the cathode plate, such as the cathode active material, the conductive agent, the binder, and any other components, are dispersed in a solvent (such as N-methylpyrrolidone) to form a cathode slurry, the cathode slurry is coated on the cathode current collector, and after drying, cold pressing, and other processes, the cathode plate can be obtained.

It should be noted that the features and advantages described above for the cathode active material and the preparation method thereof are also applicable to the cathode plate and will not be repeated here.

In a fourth aspect of the present disclosure, the present disclosure provides a battery. According to an embodiment of the present disclosure, the battery includes the above-mentioned cathode plate.

As an example, a battery includes a cathode plate, an anode plate, an electrolyte, and a separator, and the separator is located between the cathode plate and the anode plate. During the charge and discharge process of the battery, active ions intercalate and deintercalate back and forth between the cathode and the anode. The electrolyte conducts ions between the cathode and anode. The separator is set between the cathode plate and the anode plate, mainly to prevent the cathode and anode from short-circuiting, while allowing ions to pass through.

According to an embodiment of the present disclosure, the anode plate includes an anode current collector and an anode active material layer arranged on the anode current collector. The anode active material layer includes an anode active material. The anode current collector can be a metal foil or a composite current collector (the composite current collector may be formed by arranging a metal material on a polymer substrate). For example, the cathode current collector can be a copper foil.

According to some embodiments of the present disclosure, the anode active material may include at least one of the following materials: artificial graphite, natural graphite, soft carbon, hard carbon, silicon-based materials, tin-based materials, lithium titanate, etc.

According to some embodiments of the present disclosure, the anode active material layer may further optionally include a conductive agent. The conductive agent may include at least one of superconducting carbon, acetylene black, carbon black, Ketjen black, carbon dots, carbon nanotubes, graphene, or carbon nanofibers.

According to some embodiments of the present disclosure, the anode active material layer may optionally further include additional additives, such as a thickener (e.g., sodium carboxymethyl cellulose (CMC-Na)).

According to some embodiments of the present disclosure, the anode plate can be prepared by the following method. The above-mentioned components for preparing the anode plate, such as the anode active material, the conductive agent, and the binder are dispersed in a solvent (such as deionized water) to form an anode slurry, the anode slurry is coated on the anode current collector, and after drying, cold pressing, and other processes, the anode plate can be obtained.

According to some further embodiments of the present disclosure, the anode plate may include a metal lithium plate or a lithium alloy, such as a lithium-indium alloy.

According to some other embodiments of the present disclosure, there is no particular limitation on the type of the separator, and any known separator with a porous structure having good chemical stability and mechanical stability can be selected. As an example, the material of the separator may include at least one of glass fiber, non-woven fabric, polyethylene, polypropylene, or polyvinylidene fluoride. The separator may be a single-layer film or a multi-layer composite film, without particular limitation. When the separator is a multi-layer composite film, the materials of each layer may be the same or different, without particular limitation.

According to some other embodiments of the present disclosure, the type of the electrolyte is not specifically limited and can be selected according to needs. For example, the electrolyte may be in a liquid state, a gel state, or a fully-solid state. According to some specific embodiments of the present disclosure, the electrolyte is an electrolyte solution, and the electrolyte solution includes a lithium salt and a solvent.

According to some specific embodiments of the present disclosure, the lithium salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bi(oxalato)borate, lithium difluorobi(oxalato)phosphate or lithium tetrafluoro(oxalato)phosphate.

According to some specific embodiments of the present disclosure, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethylene glycol dimethyl ether, methyl ethyl sulfone, or diethyl sulfone.

In some embodiments of the present disclosure, the electrolyte may further optionally include additives. For example, the additives may include anode film-forming additives, cathode film-forming additives, and may also include additives that can improve certain properties of the battery, such as additives that improve overcharge performance of the battery, additives that improve high- or low-temperature performance of the battery, etc.

It should be noted that the features and advantages described above for the cathode plate are also applicable to the solid-state battery and will not be repeated here.

In a fifth aspect of the present disclosure, the present disclosure provides an electrical device. According to an embodiment of the present disclosure, the electrical device includes the above-mentioned battery. According to an embodiment of the present disclosure, the electrical device may include, but is not limited to, mobile phones, laptop computers, electric vehicles, etc.

It should be noted that the features and advantages described above for the battery are also applicable to the electrical device and will not be repeated here.

Hereinafter, Examples of the present disclosure will be described. The examples described below are exemplary and are only used to explain the present disclosure, and should not be construed as limiting the present disclosure. Where specific techniques or conditions are not specified in the Examples, they are performed according to techniques or conditions described in the literature in the art or according to the product description. The reagents or instruments used without indicating the manufacturers are all conventional products that can be purchased commercially.

**Example 1**

(1) Nickel sulfate, cobalt sulfate, and manganese sulfate were dissolved in pure water at a molar ratio of element nickel, element cobalt, and element manganese of 84: 10: 6 to obtain a mixed salt solution with a concentration of 2 mol/L. A sodium hydroxide solution with a concentration of 8 mol/L was prepared as a precipitant solution, and aqueous ammonia with a concentration of 6 mol/L was prepared as a complexing agent solution. The sodium hydroxide and aqueous ammonia solutions were added to the reactor, and the $pH_1$ was adjusted to 10.9. Nitrogen was passed through the reactor for protection. The temperature of the reaction system was controlled at 60°C. The mixed salt solution, sodium hydroxide solution, and aqueous ammonia were added to the reactor from the liquid inlet pipes. The stirring speed was maintained at 500 rpm, the amount of the mixed salt solution fed was controlled at 200 mL/h, and the flow rates of the sodium hydroxide solution and the aqueous ammonia solution were adjusted to keep the pH of the reaction system stable at 10.9±0.05. After the Dv50 of the precursor crystal nuclei in the reaction system grew to 3.0 μm, the $pH_2$ of the solution was adjusted to 11.3±0.05, the flow rate of the mixed salt solution was adjusted to 500 mL/h, the stirring speed was increased to 700 rpm, and the reaction temperature was kept constant. After the average particle size Dv50 of the particles in the solution grew to 14 μm, the solution was aged for 1 h, separated, washed, and dried to obtain a cathode active material precursor.

(2) The above-mentioned precursor, lithium hydroxide, and niobium pentoxide were weighed separately at a molar ratio of a sum of the nickel, cobalt, and manganese elements in the precursor, element lithium, and element niobium of 1: 1.03: 0.007 and then mixed evenly in a mixer. The mixture was sintered at a constant temperature in an oxygen furnace. The oxygen concentration in the oxygen-containing gas in the oxygen furnace was greater than 95% by volume, the heating rate was 5°C/min, the sintering temperature was 810°C, and the sintering duration was 10h. The mixture was naturally cooled to room temperature, crushed, sieved, and iron removed to obtain a first sintered material of the cathode active material.

(3) The first sintered material of the cathode active material and boric acid were mixed evenly in a high-speed mixer according to a molar ratio of the sum of the transition metal elements in the first sintered material of the cathode active material to the element boron of 1: 0.001. The mixture was sintered at a constant temperature of 350°C in an oxygen furnace. The oxygen concentration in the oxygen-containing gas in the oxygen furnace was greater than 90% by volume. The sintering duration was 10 h. After cooling, screening, and iron removal, the cathode active material $Li_{1.03}Ni_{0.813}Co_{0.100}Mn_{0.060}Nb_{0.004}P_{0.003}O_2@B$ was obtained. In the chemical formula of the cathode active material, a part before @ represents the matrix component, and a part after @ represents the main element in the coating layer.

**Examples 2 to 8 and Comparative Examples 1 to 7**

The cathode active materials were prepared according to the method of Example 1. The differences in material composition and specific process conditions were shown in Table 1.

In Example 2, magnesium oxide was used as the dopant, and boric acid was used as the coating agent.

In Example 3, tantalum pentoxide was used as the dopant, and boric acid was used as the coating agent.

In Example 4, magnesium oxide was used as the dopant, and tungsten trioxide was used as the coating agent.

In Example 5, molybdenum oxide was used as the dopant, and tungsten trioxide was used as the coating agent.

In Example 6, niobium pentoxide and antimony trioxide were used as the dopants, and boric acid was used as the coating agent.

In Example 7, strontium oxide and antimony trioxide were used as the dopants, and boric acid was used as the coating agent.

In Example 8, niobium pentoxide was used as the dopant, and no coating agent was used.

In Comparative Example 1, aluminum oxide and niobium pentoxide were used as the dopants, and boric acid was used as the coating agent.

In Comparative Example 2, niobium pentoxide was used as the dopant, and boric acid was used as the coating agent.

In Comparative Example 3, niobium pentoxide and ammonium dihydrogen phosphate were used as the dopants, and boric acid was used as the coating agent.

In Comparative Example 4, no dopant was used, and boric acid was used as the coating agent.

In Comparative Example 5, antimony trioxide was used as the dopant, and boric acid was used as the coating agent.

In Comparative Example 6, niobium pentoxide was used as the dopant, and boric acid was used as the coating agent.

In Comparative Example 7, niobium pentoxide was used as the dopant, and boric acid was used as the coating agent.

Table 1

| | Step i) co-precipitation of precursor | | | Step ii) doping and sintering | | | | Step iii) coating and sintering | | | |
|---|---|---|---|---|---|---|---|---|---|---|---|
| | Molar ratio of nickel salt, cobalt salt, and manganese salt based on element Ni, element Co, and element Mn | pH of grain nucleation | pH: of grain growth | Doping element M | Molar ratio of precursor, lithium source, and dopant based on elements (Ni+Co+Mn), element lithium, and element M | Sintering temperature (°C) | Sintering duration (h) | Coating element J | Molar ratio of sum of transition metal elements in first sintered material of the cathode active material to element J | Sintering temperature (°C) | Sintering duration (h) |
| Example 1 | 84: 10: 6 | 10.9 | 11.3 | Nb | 1: 1.03: 0.007 | 810 | 10 | B | 1: 0.001 | 350 | 10 |
| Example 2 | 80: 12: 8 | 11 | 11.6 | Mg | 1: 1.03: 0.007 | 830 | 10 | B | 1: 0.001 | 350 | 10 |
| Example 3 | 88: 6: 6 | 10.9 | 11.4 | Ta | 1: 1.03: 0.007 | 800 | 10 | B | 1: 0.001 | 350 | 10 |
| Example 4 | 90: 5: 5 | 10.8 | 11.2 | Mg | 1: 1.03: 0.007 | 770 | 10 | w | 1: 0.001 | 420 | 10 |
| Example 5 | 95: 3: 2 | 10.8 | 11.2 | Mo | 1: 1.03: 0.007 | 750 | 10 | W | 1: 0.001 | 420 | 10 |
| Example 6 | 84: 10: 6 | 10.9 | 11.3 | Nb and Sb | 1: 1.03: 0.007:0.007 | 810 | 10 | B | 1: 0.001 | 350 | 10 |
| Example 7 | 84:10: 6 | 10.9 | 11.3 | Sr and Sb | 1: 1.03: 0.007 | 810 | 10 | B | 1: 0.001 | 350 | 10 |
| Example 8 | 84: 10: 6 | 10.9 | 11.3 | Nb | 1: 1.03: 0.007 | 810 | 10 | / | / | / | / |
| Comparative Example 1 | 84: 10: 6 | 10.9 | 11.3 | Al and Nb | 1: 1.03: 0.02: 0.007 | 810 | 10 | B | 1: 0.001 | 350 | 10 |
| Comparative Example 2 | 84: 10: 6 | 10.9 | 11.3 | Nb | 1: 1.03: 0.007 | 920 | 10 | B | 1: 0.001 | 350 | 10 |
| Comparative Example 3 | 84: 10: 6 | 10.9 | 11.3 | Nb | 1: 1.03: 0.007 | 810 | 18 | B | 1: 0.001 | 350 | 10 |
| Comparative Example 4 | 84: 10: 6 | 10.9 | 11.3 | / | / | 810 | 10 | B | 1: 0.001 | 350 | 10 |
| Comparative Example 5 | 84: 10: 6 | 10.9 | 11.3 | Sb | 1: 1.03: 0.02 | 810 | 10 | B | 1: 0.001 | 350 | 10 |
| Comparative Example 6 | 84: 10: 6 | 10.9 | 12.1 | Nb | 1: 1.03: 0.007 | 810 | 10 | B | 1: 0.001 | 350 | 10 |

| | Step i) co-precipitation of precursor | | | Step ii) doping and sintering | | | | Step iii) coating and sintering | | | |
|---|---|---|---|---|---|---|---|---|---|---|---|
| | Molar ratio of nickel salt, cobalt salt, and manganese salt based on element Ni, element Co, and element Mn | pH of grain nucleation | pH: of grain growth | Doping element M | Molar ratio of precursor, lithium source, and dopant based on elements (Ni+Co+Mn), element lithium, and element M | Sintering temperature (°C) | Sintering duration (h) | Coating element J | Molar ratio of sum of transition metal elements in first sintered material of the cathode active material to element J | Sintering temperature (°C) | Sintering duration (h) |
| Comparative Example 7 | 84: 10: 6 | 10.9 | 10.2 | Nb | 1: 1.03: 0.007 | 810 | 10 | B | 1: 0.001 | 350 | 10 |

Note: In Table 1, in Example 6, when the doping elements include Nb and Sb, the molar ratio of the precursor, the lithium source, and the dopant based on the elements (Ni+Co+Mn), the element lithium, and the element M should be understood as the molar ratio of the precursor, the lithium source, and the dopant based on the elements (Ni+Co+Mn), the element lithium, the element Nb and element Sb. The other Examples and Comparative Examples are similar.

The equivalent numbers of the crystallographic planes of the precursor and the composition of the cathode active materials obtained in Examples 2 to 8 and Comparative Examples 1 to 7 are shown in Table 2.

Table 2

| | Precursor | | | Cathode active material | |
|---|---|---|---|---|---|
| | $N_{(101)}$ | $N_{(001)}$ | $N_{(100)}$ | Matrix | Main element in coating layer |
| Example 1 | 89 | 37 | 124 | $Li_{1.03}Ni_{0.833}Co_{0.1}Mn_{0.06}Nb_{0.007}O_2$ | B |
| Example 2 | 75 | 31 | 124 | $Li_{1.03}Ni_{0.793}Co_{0.12}Mn_{0.08}Sb_{0.007}O_2$ | B |
| Example 3 | 93 | 37 | 129 | $Li_{1.03}Ni_{0.873}Co_{0.06}Mn_{0.06}Mg_{0.007}O_2$ | B |
| Example 4 | 100 | 43 | 127 | $Li_{1.03}Ni_{0.893}Co_{0.05}Mn_{0.05}Ti_{0.007}O_2$ | W |
| Example 5 | 103 | 49 | 113 | $Li_{1.03}Ni_{0.943}Co_{0.03}Mn_{0.02}Mo_{0.007}O_2$ | W |
| Example 6 | 89 | 37 | 124 | $Li1.03Ni0.826Co0.1Mn0.06Nb0.007Sb0.007O2$ | B |
| Example 7 | 89 | 37 | 124 | $Li1.03Ni0.826Co0.1Mn0.06Sr0.007Sb0.007O2$ | B |
| Example 8 | 89 | 37 | 124 | $Li_{1.03}Ni_{0.833}Co_{0.1}Mn_{0.06}Nb_{0.007}O_2$ | / |
| Comparative Example 1 | 89 | 37 | 124 | $Li_{1.03}Ni_{0.813}Co_{0.1}Mn_{0.06}Al_{0.02}Nb_{0.007}O_2$ | B |
| Comparative Example 2 | 89 | 37 | 124 | $Li_{1.03}Ni_{0.833}Co_{0.1}Mn_{0.06}Nb_{0.007}O_2$ | B |
| Comparative Example 3 | 89 | 37 | 124 | $Li_{1.03}Ni_{0.833}Co_{0.1}Mn_{0.06}Nb_{0.007}O_2$ | B |
| Comparative Example 4 | 89 | 37 | 124 | $Li_{1.03}Ni_{0.84}Co_{0.1}Mn_{0.06}O_2$ | B |
| Comparative Example 5 | 89 | 37 | 124 | $Li_{1.03}Ni_{0.817}Co_{0.1}Mn_{0.06}Sb_{0.02}O_2$ | B |
| Comparative Example 6 | 123 | 62 | 186 | $Li_{1.03}Ni_{0.833}Co_{0.1}Mn_{0.06}Nb_{0.007}O_2$ | B |
| Comparative Example 7 | 54 | 22 | 89 | $Li_{1.03}Ni_{0.833}Co_{0.1}Mn_{0.06}Nb_{0.007}O_2$ | B |

The average thickness $D_{(003)}$ of crystallites in the cathode active material perpendicular to the (003) crystallographic plane, the interplanar spacing $d_{(003)}$ of the (003) crystallographic planes in the crystallites of the cathode active material, the average thickness $D_{(104)}$ of the crystallites in the cathode active material perpendicular to the (104) crystallographic plane, the interplanar spacing $d_{(104)}$ of the (104) crystallographic planes in the crystallites of the cathode active material, the equivalent number $N_{(003)}$ of the (003) crystallographic planes of the cathode active material, the equivalent number $N_{(104)}$ of the (104) crystallographic planes of the cathode active material, and $N_{(003)}*N_{(104)}$ obtained in Examples 2 to 8 and Comparative Examples 1 to 7 are shown in Table 3.

Table 3

| | $D_{(003)}$(nm) | $d_{(003)}$ (nm) | $N_{(003)}$ | $D_{(104)}$ (nm) | $d_{(104)}$ (nm) | $N_{(104)}$ | $N_{(003)}*N_{(104)}$ |
|---|---|---|---|---|---|---|---|
| Example 1 | 52.80 | 0.4739 | 111 | 38.63 | 0.2039 | 189 | 21108 |
| Example 2 | 50.06 | 0.474 | 106 | 34.96 | 0.204 | 171 | 18099 |
| Example 3 | 49.61 | 0.4736 | 105 | 34.35 | 0.2039 | 168 | 17647 |
| Example 4 | 50.28 | 0.4735 | 106 | 33.98 | 0.2038 | 167 | 17705 |

(continued)

| | D$_{(003)}$(nm) | d$_{(003)}$ (nm) | N$_{(003)}$ | D$_{(104)}$ (nm) | d$_{(104)}$ (nm) | N$_{(104)}$ | N$_{(003)}$*N$_{(104)}$ |
|---|---|---|---|---|---|---|---|
| Example 5 | 48.94 | 0.4734 | 103 | 32.92 | 0.2037 | 162 | 16707 |
| Example 6 | 37.31 | 0.4791 | 78 | 29.75 | 0.2038 | 146 | 11368 |
| Example 7 | 67.36 | 0.4765 | 141 | 42.21 | 0.2039 | 207 | 29264 |
| Example 8 | 52.70 | 0.474 | 111 | 38.55 | 0.204 | 189 | 21010 |
| Comparative Example 1 | 33.51 | 0.4745 | 71 | 23.42 | 0.204 | 115 | 8108 |
| Comparative Example 2 | 68.91 | 0.4739 | 145 | 44.72 | 0.2039 | 219 | 31892 |
| Comparative Example 3 | 70.56 | 0.4739 | 149 | 46.33 | 0.2039 | 227 | 33831 |
| Comparative Example 4 | 64.88 | 0.4703 | 138 | 45.96 | 0.201 | 229 | 31544 |
| Comparative Example 5 | 36.55 | 0.4796 | 76 | 27.21 | 0.2082 | 131 | 9960 |
| Comparative Example 6 | 70.91 | 0.4738 | 150 | 48.33 | 0.2039 | 237 | 35474 |
| Comparative Example 7 | 35.43 | 0.4737 | 75 | 25.86 | 0.2039 | 127 | 9486 |

The cathode active materials obtained in Examples 1 to 8 and Comparative Examples 1 to 7 were assembled into 2025-type coin batteries, and the first cycle coulombic efficiency, cycling performance, rate capability, and lithium-ion diffusion coefficient of the batteries were characterized. The characterization results were shown in Table 4.

The preparation process of the 2025-type coin battery was as follows.

Preparation of the cathode plate: the cathode active material, acetylene black, and polyvinylidene fluoride (PVDF) at a mass ratio of 95: 3: 2 were thoroughly mixed with an appropriate amount of N-methylpyrrolidone (NMP) to form a uniform slurry. The slurry was coated on both sides of an aluminum foil. The coated aluminum foil was dried at 120°C for 12 h, and then stamped using a pressure of 100 MPa to produce a cathode plate with a diameter of 12 mm and a thickness of 120 $\mu$m. The loading amount of the cathode active material on the aluminum foil ranged from 15 mg/cm$^2$ to 16 mg/cm$^2$.

Assembly of the battery: in an argon-filled glove box with a water content and an oxygen content both below 5 ppm, the cathode plate, the separator, the anode plate, and the electrolyte were assembled into a 2025-type coin battery and left to stand for 6 h. The anode plate was a metal lithium plate with a diameter of 17 mm and a thickness of 1 mm. The separator used a polyethylene porous membrane (Celgard 2325) with a thickness of 25 $\mu$m. The electrolyte included lithium salt LiPF$_6$ and a solvent (ethylene carbonate (EC) and diethyl carbonate (DEC) in a volume ratio of 1: 1), and the concentration of LiPF$_6$ in the electrolyte was 1 mol/L.

First cycle coulombic efficiency test:

At 25°C, the battery was charged to 4.4V at a constant current of 0.1C, and then charged to 0.02C at a constant voltage to obtain the first cycle charging specific capacity C$_0$ of the battery. The battery was then discharged to 3.0V at a constant current of 0.1C to obtain the first cycle discharging specific capacity C$_1$ of the battery. The first cycle coulombic efficiency of the battery = C$_1$/C$_0\times$100%.

The charge and discharge voltage range was controlled between 3.0V and 4.3V. At room temperature, the coin battery was charged and discharged at 0.1C to evaluate the electrochemical performance of the multi-element cathode material.

Cycling performance test: at 45°C, the battery was charged to 4.3V at a constant current of 1C to obtain the first charging specific capacity C$_2$ of the battery, then discharged to 3.0V at a constant current of 1C, and then cycled for 80 cycles at a constant current of 1C. The discharging specific capacity C$_{80}$ at the 80-th cycle, C$_{80}$, was recorded. The first cycle coulombic efficiency of the battery = C$_{80}$/C$_2\times$100%.

Rate capability test: the charge and discharge voltage range was controlled between 3.0V and 4.3V. At room temperature, the coin battery was charged and discharged twice at 0.1C, and then charged and discharged once at 0.2C, 0.33C, 0.5C, and 1C. The ratio of first discharging specific capacity at 0.1C to the discharging specific capacity at 1C was used to characterize the rate capability of the battery. The first discharging specific capacity at 0.1C was the discharging specific capacity of the coin battery in the first cycle, and the discharging specific capacity at 1C was the discharging specific capacity of the coin battery in the 6-th cycle.

Diffusion coefficient test: EIS test and analysis were used. The battery was charged to 4.3 V at a constant current of 0.1 C, charged at a constant voltage for 30 min, and then discharged to 3.0 V at a constant current of 0.1 C. The battery was then charged to 4.3 V at a constant current of 0.1 C again. The fully charged half-battery was subjected to an EIS test in the frequency range between (100) kHz and 0.01 Hz with an amplitude of 10 mV. According to the following formula, the slope $\sigma$ of the fitting line between $Z_{re}$ and $\omega^{-1/2}$ can be obtained.

$$Z_{re} = R_s + R_{ct} + \sigma\omega^{-1/2}$$

$$\omega = 2\pi f$$

$Z_{re}$ is a real part of the impedance spectrum obtained by the test, $R_s$ is a solution resistance, $R_{ct}$ is a charge transfer resistance, $\omega$ is an angular frequency, f is a test frequency, and $\sigma$ is a Warburg factor.

According to the calculation formula of lithium-ion diffusion coefficient, the bulk $Li^+$ diffusion coefficient $D_{Li}^+$ of the material was obtained.

$$D_{Li}^+ = R^2 T^2 / (2A^2 n^4 F^4 C^2 \sigma^2)$$

In the formula, R is an ideal gas constant, T is an absolute temperature, A is a cross-sectional area of an electrode, n is a number of electron transfers, F is a Faraday constant, and C is a lithium-ion concentration in the electrode.

Table 4

| | Charging specific capacity at 0.1C (mAh/g) | Discharging specific capacity at 0.1C (mAh/g) | First cycle efficiency (%) | Rate capacity (1C/0.1C) | Cycle retention rate (%) | Lithium-ion diffusion coefficient |
|---|---|---|---|---|---|---|
| Example 1 | 235.6 | 215.2 | 91.3 | 0.89 | 88.4 | $8.1\times10^{-11}$ |
| Example 2 | 232 | 210.7 | 90.8 | 0.89 | 88.5 | $8.0\times10^{-11}$ |
| Example 3 | 238.4 | 219.1 | 91.9 | 0.9 | 88.2 | $8.2\times10^{-11}$ |
| Example 4 | 242.4 | 228.9 | 94.4 | 0.89 | 87.9 | $8.3\times10^{-11}$ |
| Example 5 | 246.1 | 233.4 | 94.8 | 0.89 | 87.5 | $8.4\times10^{-11}$ |
| Example 6 | 237.3 | 213.9 | 90.1 | 0.87 | 85.1 | $8.9\times10^{-11}$ |
| Example 7 | 234.9 | 214.3 | 91.2 | 0.85 | 82.6 | $7.2\times10^{-11}$ |
| Example 8 | 236.7 | 214.9 | 90.8 | 0.89 | 83.3 | $8.4\times10^{-11}$ |
| Comparative Example 1 | 238.9 | 211.9 | 88.7 | 0.87 | 83.6% | $9.2\times10^{-11}$ |
| Comparative Example 2 | 233.9 | 213.6 | 90 | 0.85 | 77.6% | $6.3\times10^{-11}$ |
| Comparative Example 3 | 232.5 | 212.9 | 90.7 | 0.87 | 76.3% | $4.1\times10^{-11}$ |
| Comparative Example 4 | 236.9 | 210 | 88.6 | 0.88 | 74.8% | $7.2\times10^{-11}$ |
| Comparative Example 5 | 232.6 | 210.3 | 90.4 | 0.87 | 82.1% | $8.6\times10^{-11}$ |
| Comparative Example 6 | 233.3 | 209.7 | 89.9 | 0.84 | 78.8% | $4.9\times10^{-11}$ |
| Comparative Example 7 | 234.4 | 210.3 | 89.7 | 0.84 | 83.0% | $7.2\times10^{-11}$ |

It can be seen from Table 3 that $N_{(003)}*N_{(104)}$ of the cathode active materials in Examples 1 to 8 ranges from $1*10^4$ to $3*10^4$, while $N_{(003)}*N_{(104)}$ of the cathode active materials in Comparative Examples 1 to 7 are not within the range between $1*10^4$ to $3*10^4$. It can be seen from Table 4 that the charging specific capacity, discharging specific capacity, first cycle coulombic efficiency, rate capability, and capacity retention rate of the batteries in Examples 1 to 8 are significantly higher than those in Comparative Examples 1 to 7, and the lithium-ion diffusion coefficient can also be maintained within an appropriate range. This indicates that the use of a cathode active material with $N_{(003)}*N_{(104)}$ ranging from $1*10^4$ to $3*10^4$ can enable the battery loaded with the cathode active material to have both high energy density, cycling performance, and rate capability.

In the specification, the description of the reference terms such as "one embodiment", "some embodiments", "example", "specific example", or "some examples" means that the specific features, structures, materials, or characteristics described with reference to the embodiment or example are included in at least an embodiment or example of the present disclosure. In this specification, exemplary descriptions of the foregoing terms do not necessarily refer to the same embodiment or example. Moreover, the specific features, structures, materials, or characteristics described may be combined in any one or more embodiments or examples in a suitable manner. Furthermore, those skilled in the art may combine different embodiments or examples and features of different embodiments or examples described in this specification, unless they are contradictory to each other.

Although embodiments of the present disclosure are illustrated and described above, it can be understood that the above embodiments are illustrative and should not be construed as limitations of the present disclosure. Those skilled in the art can make changes, modifications, substitutions, and variations to the above embodiments within the scope of the present disclosure.

**Claims**

1. A cathode active material, wherein the cathode active material comprises a plurality of primary particles, wherein an equivalent number $N_{(003)}$ of (003) crystallographic planes of the cathode active material and an equivalent number $N_{(104)}$ of (104) crystallographic planes of the cathode active material satisfy:
   $N_{(003)}*N_{(104)}$ ranges from $1*10^4$ to $3*10^4$;

$$N_{(003)} = \frac{D_{(003)}}{d_{(003)}};$$

   and

$$N_{(104)} = \frac{D_{(104)}}{d_{(104)}},$$

   where:

   $D_{(003)}$ is an average thickness of crystallites in the cathode active material perpendicular to the (003) crystallographic plane, in the unit of nm;
   $d_{(003)}$ is an interplanar spacing of the (003) crystallographic planes in the crystallites of the cathode active material, in the unit of nm;
   $D_{(104)}$ is an average thickness of the crystallites in the cathode active material perpendicular to the (104) crystallographic plane, in the unit of nm; and
   $d_{(104)}$ is an interplanar spacing of the (104) crystallographic planes in the crystallites of the cathode active material, in the unit of nm.

2. The cathode active material according to claim 1, wherein $N_{(003)}*N_{(104)}$ ranges from $1.5*10^4$ to $2.5*10^4$.

3. The cathode active material according to claim 1 or 2, wherein the equivalent number $N_{(003)}$ of the (003) crystallographic planes of the cathode active material ranges from 80 to 140.

4. The cathode active material according to any one of claims 1 to 3, wherein the equivalent number $N_{(003)}$ of the (003) crystallographic planes of the cathode active material ranges from 90 to 130.

5. The cathode active material according to any one of claims 1 to 4, wherein the equivalent number $N_{(104)}$ of the (104) crystallographic planes of the cathode active material ranges from 130 to 200.

6. The cathode active material according to any one of claims 1 to 5, wherein the equivalent number $N_{(104)}$ of the (104) crystallographic planes of the cathode active material ranges from 140 to 190.

7. The cathode active material according to any one of claims 1 to 6, wherein the average thickness $D_{(003)}$ of the crystallites in the cathode active material perpendicular to the (003) crystallographic plane ranges from 40 nm to 60 nm.

8. The cathode active material according to any one of claims 1 to 7, wherein the average thickness $D_{(003)}$ of the crystallites in the cathode active material perpendicular to the (003) crystallographic plane ranges from 45 nm to 55 nm.

9. The cathode active material according to any one of claims 1 to 8, wherein the interplanar spacing $d_{(003)}$ of the (003) crystallographic planes in the crystallites of the cathode active material ranges from 0.4730 nm to 0.4760 nm.

10. The cathode active material according to any one of claims 1 to 9, wherein the interplanar spacing $d_{(003)}$ of the (003) crystallographic planes in the crystallites of the cathode active material ranges from 0.4732 nm to 0.4750 nm.

11. The cathode active material according to any one of claims 1 to 10, wherein the average thickness $D_{(104)}$ of the crystallites in the cathode active material perpendicular to the (104) crystallographic plane ranges from 20 nm to 50 nm.

12. The cathode active material according to any one of claims 1 to 11, wherein the average thickness $D_{(104)}$ of the crystallites in the cathode active material perpendicular to the (104) crystallographic plane ranges from 30 nm to 40 nm.

13. The cathode active material according to any one of claims 1 to 12, wherein the interplanar spacing $d_{(104)}$ of the (104) crystallographic planes in the crystallites of the cathode active material ranges from 0.2035 nm to 0.2045 nm.

14. The cathode active material according to any one of claims 1 to 13, wherein the interplanar spacing $d_{(104)}$ of the (104) crystallographic planes in the crystallites of the cathode active material ranges from 0.2037 nm to 0.2042 nm.

15. The cathode active material according to any one of claims 1 to 14, comprising a matrix, wherein the matrix comprises $Li_{1+a}Ni_xCo_yMn_zM_mO_2$, where:

$$-0.05 \leq a \leq 0.3;$$

$$0.8 \leq x \leq 1;$$

$$0 \leq y \leq 0.2;$$

$$0 \leq z \leq 0.2;$$

$$0.002 \leq m \leq 0.01;$$

and
M comprises at least one of Sb, Nb, Mg, La, Ti, Al, Sr, Ba, Y, Zr, Ca, Fe, S, Zn, or Ta.

16. The cathode active material according to claim 15, further comprising a coating layer formed on at least a portion of a surface of the matrix, wherein the coating layer contains element J, the element J comprising at least one of F, B, Cl, Br, I, S, Al, W, Co, Sn, or Mo.

17. A method for preparing the cathode active material according to any one of claims 1 to 16, comprising:

preparing a cathode active material precursor;
performing first mixing sintering on the cathode active material precursor with a lithium source and a dopant containing element M, to obtain a first sintered material of the cathode active material.

18. The method according to claim 17, wherein said preparing the cathode active material precursor comprises:

adjusting pH of a mixed system comprising a nickel salt, a cobalt salt, a manganese salt, a precipitant, and a complexing agent to $pH_1$ to obtain precursor crystal nuclei, wherein the $pH_1$ ranges from 9 to 12, and wherein the precursor crystal nuclei have a Dv50 ranging from 2 $\mu$m to 4 $\mu$m; and

adjusting the pH of the mixed system to $pH_2$ to obtain the cathode active material precursor, the $pH_2$ ranging from 9 to 13 and being greater than the $pH_1$.

19. The method according to claim 18, wherein a difference between the $pH_2$ and the $pH_1$ ranges from 0.1 to 1.

20. The method according to any one of claims 17 to 19, wherein the cathode active material precursor satisfies at least one of the following conditions:

the cathode active material precursor has a Dv50 ranging from 9 $\mu$m to 20 $\mu$m;
an equivalent number $N_{(101)}$ of (101) crystallographic planes of the cathode active material precursor ranges from 60 to 120;
an equivalent number $N_{(001)}$ of (001) crystallographic planes of the cathode active material precursor ranges from 20 to 60; or
an equivalent number $N_{(100)}$ of (100) crystallographic planes of the cathode active material precursor ranges from 110 to 140.

21. The method according to any one of claims 17 to 20, wherein the cathode active material precursor satisfies at least one of the following conditions:

an equivalent number $N_{(101)}$ of (101) crystallographic planes of the cathode active material precursor ranges from 60 to 90;
an equivalent number $N_{(001)}$ of (001) crystallographic planes of the cathode active material precursor ranges from 20 to 50; or
an equivalent number $N_{(100)}$ of (100) crystallographic planes of the cathode active material precursor ranges from 110 to 130.

22. The method according to any one of claims 17 to 21, wherein:

a temperature of the first mixing sintering ranges from 650°C to 900°C, and
a duration of the first mixing sintering ranges from 4 hours to 15 hours.

23. The method according to any one of claims 17 to 22, further comprising:
performing second mixing sintering on the first sintered material of the cathode active material with a coating agent containing the element J, to form the coating layer containing the element J on at least a portion of a surface of the first sintered material of the cathode active material.

24. The method according to claim 23, wherein:

a temperature of the second mixing sintering ranges from 200°C to 700°C, and
a duration of the second mixing sintering ranges from 3 hours to 10 hours.

25. A cathode plate, comprising:

the cathode active material according to any one of claims 1 to 16; or
the cathode active material obtained by the method according to any one of claims 17 to 24.

26. A battery, comprising the cathode plate according to claim 25.

27. An electrical device, comprising the battery according to claim 26.

## INTERNATIONAL SEARCH REPORT

| International application No. |
| --- |
| **PCT/CN2024/096120** |

| A. | CLASSIFICATION OF SUBJECT MATTER |
| --- | --- |

H01M 4/525(2010.01)i; H01M4/505(2010.01)i; H01M4/485(2010.01)i; H01M4/36(2006.01)i; H01M4/131(2010.01)i; H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC/CPC: H01M4/-; H01M10/-

Documentation searched other than minimum documentation to the extent that such documents are included in the fields searched

Electronic data base consulted during the international search (name of data base and, where practicable, search terms used)

CJFD, CNTXT, ENTXTC, WPABS: 正极, 晶面, 层, 厚, 间距, 包覆, 掺杂, 电池, anode, crystal, face, layer, plane, thickness, coating, doped, battery

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 117712369 A (WANHUA CHEMICAL (YANTAI) BATTERY MATERIAL TECHNOLOGY CO., LTD. et al.) 15 March 2024 (2024-03-15) description, paragraphs [0044]-[0051], and embodiment 2 | 1-15, 17-22, 25-27 |
| Y | CN 117712369 A (WANHUA CHEMICAL (YANTAI) BATTERY MATERIAL TECHNOLOGY CO., LTD. et al.) 15 March 2024 (2024-03-15) description, paragraphs [0044]-[0051], and embodiment 2 | 16, 23, 24 |
| Y | CN 117810391 A (SHENZHEN BTR NANO TECHNOLOGY CO., LTD.) 02 April 2024 (2024-04-02) description, paragraphs [0003]-[0021], [0037], and [0043] | 16, 23, 24 |
| A | CN 107681152 A (ECOPRO BM CO., LTD.) 09 February 2018 (2018-02-09) entire document | 1-27 |
| A | CN 115148985 A (ECOPRO BM CO., LTD.) 04 October 2022 (2022-10-04) entire document | 1-27 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 December 2024** | **03 January 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/096120** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 116799165 A (BEIJING EASPRING MATERIAL TECHNOLOGY CO., LTD.) 22 September 2023 (2023-09-22)<br>entire document | 1-27 |
| A | CN 117080423 A (WANHUA CHEMICAL (YANTAI) BATTERY MATERIAL TECHNOLOGY CO., LTD. et al.) 17 November 2023 (2023-11-17)<br>entire document | 1-27 |
| A | CN 117613259 A (GUANGXI ZHONGWEI NEW ENERGY TECHNOLOGY CO., LTD. et al.) 27 February 2024 (2024-02-27)<br>entire document | 1-27 |
| A | WO 2023027499 A1 (SM LAB CO., LTD.) 02 March 2023 (2023-03-02)<br>entire document | 1-27 |
| A | WO 2024065647 A1 (CONTEMPORARY AMPEREX TECHNOLOGY CO., LTD.) 04 April 2024 (2024-04-04)<br>entire document | 1-27 |

Form PCT/ISA/210 (second sheet) (July 2022)

## INTERNATIONAL SEARCH REPORT
### Information on patent family members

International application No.

**PCT/CN2024/096120**

| Patent document cited in search report | | | Publication date (day/month/year) | Patent family member(s) | | | Publication date (day/month/year) |
|---|---|---|---|---|---|---|---|
| CN | 117712369 | A | 15 March 2024 | None | | | |
| CN | 117810391 | A | 02 April 2024 | None | | | |
| CN | 107681152 | A | 09 February 2018 | JP | 2018022676 | A | 08 February 2018 |
| | | | | JP | 6771419 | B2 | 21 October 2020 |
| | | | | EP | 3279977 | A1 | 07 February 2018 |
| | | | | EP | 3279977 | B1 | 11 March 2020 |
| | | | | US | 2020036006 | A1 | 30 January 2020 |
| | | | | US | 10700355 | B2 | 30 June 2020 |
| | | | | US | 2018040891 | A1 | 08 February 2018 |
| | | | | US | 10483540 | B2 | 19 November 2019 |
| | | | | PL | 3279977 | T3 | 24 August 2020 |
| CN | 115148985 | A | 04 October 2022 | EP | 4183749 | A1 | 24 May 2023 |
| | | | | KR | 20220135707 | A | 07 October 2022 |
| | | | | KR | 102632381 | B1 | 01 February 2024 |
| | | | | US | 2022320506 | A1 | 06 October 2022 |
| | | | | KR | 20240018546 | A | 13 February 2024 |
| | | | | JP | 2024001056 | A | 09 January 2024 |
| | | | | JP | 2022159119 | A | 17 October 2022 |
| | | | | JP | 7356532 | B2 | 04 October 2023 |
| | | | | KR | 20240017880 | A | 08 February 2024 |
| CN | 116799165 | A | 22 September 2023 | None | | | |
| CN | 117080423 | A | 17 November 2023 | None | | | |
| CN | 117613259 | A | 27 February 2024 | None | | | |
| WO | 2023027499 | A1 | 02 March 2023 | US | 2024234707 | A1 | 11 July 2024 |
| | | | | JP | 2024516811 | A | 17 April 2024 |
| | | | | EP | 4318667 | A1 | 07 February 2024 |
| WO | 2024065647 | A1 | 04 April 2024 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202410545373